# EUROPEAN PATENT APPLICATION

(11) **EP 0 666 193 A2**
(43) Date of publication of application: **09.08.1995**
(21) Application number: 95830003.0
(22) Date of filing: 13.01.1995
(51) Int. Cl.: B60K 17/28

(54) **Adapter between power take-off and gearbox in a vehicle**

(30) Priority: 02.02.1994 IT BS940009 U
(71) Applicant: O.M.F.B. S.p.A., I-25050 Provaglio d'Iseo (Brescia) (IT)
(72) Inventor: Ghirardelli, Pierangelo, I-25054 Marone (Brescia) (IT)
(74) Representative: Manzoni, Alessandro

(57) **Abstract**

A coupling device between a power take-off and a gearbox in a vehicle designed to operate it, which comprises a coupling sleeve (16) provided as a separate element, having, on one hand, engagement teeth (17) corresponding to and designed to be coupled with the teeth (112) of the speed-change shaft (11) and, on the other hand, a cylindrical portion (16') having an axial seat or hole (18) designed to receive a centre shaft (12) and, peripherally, a grooved profile (19) designed to join with a similar inside grooved profile (14') of the transmission gear (14) for control thereof.

## Description

The present invention concerns power take-offs in general which are applied to and operated by vehicle gearboxes, and more particularly it relates to an adapter to be installed between a power take-off and a gearbox in a vehicle.

For engagement/disengagement, known power take-offs are provided with an engagement toothed member which is displaceable towards and away from driving teeth provided at the end of a change-speed output shaft in a vehicle. According to the most common embodiments, the displaceable toothed member constitutes a monolythical body integral with a support shaft coupled to a pneumatic piston which causes engagement/disengagement movements of the power take-off and, peripherally, a gear for power transmission from such toothed member to a driven shaft.

However, engagement toothed member and support shaft in integral configuration limit the possibilities and flexibility of application of a power take-off to the different types of gearboxes mounted in the various vehicles on the market. This is because gearbox producers have adopted different diameters and/or diametral pitches at the driving teeth or at the teeth which receive couples from a gearbox, which therefore require provision of a power take-off with a specific and complementary engagement toothed member.

Therefore, power take-off producers have to include in their catalogues and be able to supply a number of different power take-offs in order to fulfil different requirements; moreover they have to fit each power take-off with a suitable flange for coupling and application to a compatible gearbox.

It is an object of the present invention to obviate said limits and disadvantageous characteristics by providing a power take-off whose structure permits convenient and practical adaptation to any type of gearbox, whatever the diameter and/or the diametral pitch of the driving teeth or of the teeth which receive couples from gearboxes.

Such an object is attained by providing an engagement toothed member in the form of a separate sleeve which has teeth designed to engage with the teeth of a change-speed shaft and a portion including an axial seat for coupling with a support shaft driven by an engagement/disengagement piston and, peripherally, a grooved profile so as to fit with a power transmission gear at least to a driven shaft.

According to the invention therefore, the sleeve with engagement teeth is separate from the respective support shaft and may be applied and locked to such shaft at any time. In this way, it is possible to arrange a power take-off in one only model, complete in all its parts except for the toothed sleeve, and supply the power take-off with a toothed sleeve compatible with the teeth of the change-speed shaft and a coupling flange, so as to permit interfacing of the power take-off with the gearbox designed to receive it.

In other words, it is possible to build, on the one hand, a number of sleeves with teeth different in diameter and/or diametral pitch and, on the other hand, one model only of a power take-off, complete though without a toothed sleeve, so as to choose each time a suitable sleeve whose toothing is compatible with the one provided on the change speed shaft, fix the sleeve to the respective support shaft operated by the engagement/disengagement piston, and finally apply the power take-off to the gearbox through the coupling flange.

This embodiment offers various advantages, which may be summarized as follows:
- logistic, to better standardize the more expensive assembly and therefore better manage stocks, thus reducing associated costs;
- flexibility, to spend less time on the realization of the different components required for interfacing to gearboxes;
- commercial, to better manage sales and reduce costs for satellite warehouses;
- assembly, since after identifying the type of flange and the sleeve which fit the vehicle gearbox, the operator will only have to insert and axially fix said sleeve onto the pin or shaft and into the inside grooved profile of the transmission gear wheel.

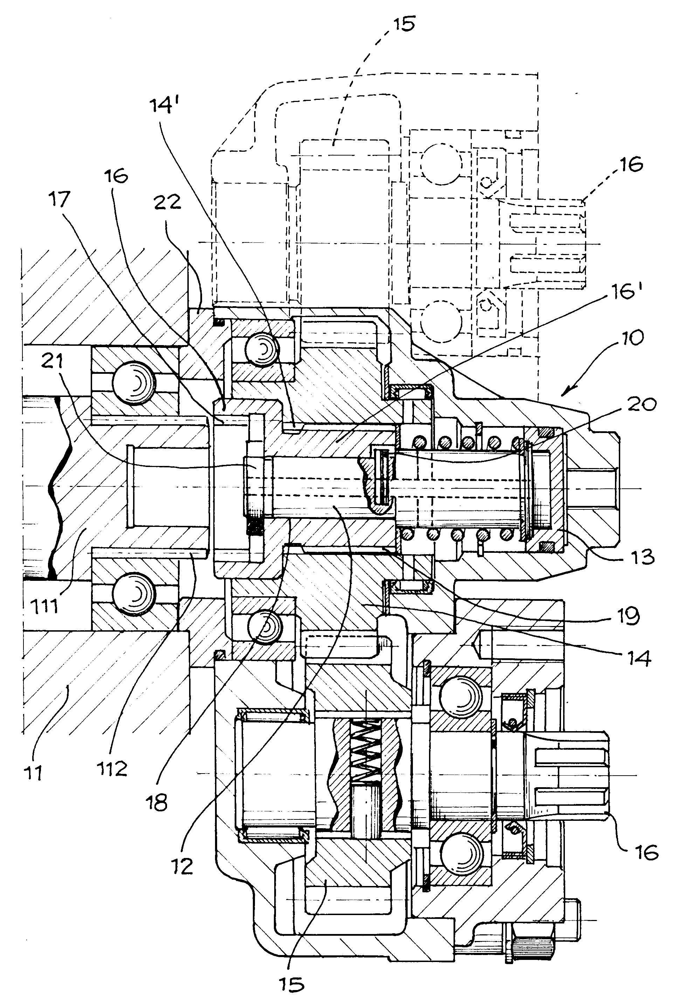

A practical embodiment of a power take-off according to the invention is illustrated in the accompanying drawing by way of indicative and non-limitative example. Such drawing shows a sectional view of a power take-off 10 applied to a gearbox 11 in a vehicle. The power take-off 10 is known and does not deserve any detailed description. It should only be noticed that it includes a centre support shaft 12 which is axially displaceable by means of an engagement/disengagement pneumatic piston 13 and, around said shaft, a driven gear 14 provided with an inside grooved profile 14'.

Such gear controls, through at least one gear wheel 15, at least one output shaft 16 of the power take-off.

On the other hand, the gearbox 11 includes a transmission or couple-receiving shaft 111 provided with teeth 112 which is designed to be coupled and engaged to the power take-off 10.

For such coupling, the power take-off according to the invention comprises a sleeve 16 which is provided as a separate body. Such coupling sleeve includes, on the one hand, engagement teeth 17 corresponding to and designed to engage with the teeth 112 of the change-speed shaft 11 and, on the other hand, a cylindrical portion 16' provided with an axial seat or hole 18 designed to receive the centre shaft 12 and, peripherally, a grooved profile 19 designed to join with the inside grooved profile 14' of the gear 14.

The sleeve 16 provided with engagement teeth 17 is inserted in the shaft 12 and positioned thereon by means of a reference pin 20, and it is axially fixed thereto by a nut 21, a seeger ring or by any other locking means. By applying the sleeve 16 on the shaft, the outer grooved profile 19 of the sleeve is coupled to the inside grooved profile 14' of the gear 14 thus completing the power take-off 10, which may be applied to the gearbox by means of a coupling flange 22 supplied with the power take-off, according to the gearbox to which it is to be coupled.

In practice, the sleeve 16 is axially locked to the shaft 12 for engagement/disengagement displacements thereof, namely towards and away from the change-speed shaft 111 respectively, and transmits motion directly to the transmission gear 14 through the joined grooved profiles 19,14', substantially without torque-stressing the support shaft.

All this for the abovementioned objects and advantages.

## Claims

1. A coupling device between a power take-off and a gearbox in a vehicle for operation thereof, in which the power take-off comprises a centre support shaft (12) axially displaceable by means of an engagement/disengagement pneumatic piston and, around said shaft, a transmission gear (14) designed to control, through at least one gear wheel (15), at least one output shaft (16) of the power take-off, the gearbox comprising a transmission or driven shaft 111 with engagement teeth (112), characterized in that a coupling sleeve (16) is provided as a separate element and comprises, on the one hand, engagement teeth (17) corresponding to and designed to be coupled with the teeth (112) of the speed-change shaft (11) and, on the other hand, a cylindrical portion (16') having an axial seat or hole (18) designed to receive the centre shaft (12) and, peripherally, a grooved profile (19) designed to join with a similar inside grooved profile (14') of the transmission gear (14) for operation thereof.

2. A coupling device as claimed in claim 1, wherein said coupling sleeve (16) is chosen and applied compatibly with the diameter and/or diametral pitch of the engagement teeth (112) of the shaft (11), starting from an assembly constituted by a power take-off complete in all its parts though without a coupling sleeve; the power take-off is then applied to the gearbox by means of an adapter flange.

3. A coupling device as claimed in claims 1 and 2, wherein said sleeve (16) is positioned on the support shaft (12) by means of a reference pin and axially fixed on said shaft by means of a nut, a seeger ring or any other locking means.
